# EUROPEAN PATENT SPECIFICATION

(11) **EP 3 108 112 B1**
(45) Date of publication and mention of the grant of the patent: **11.10.2023**
(21) Application number: 15752432.3
(22) Date of filing: 17.02.2015
(51) Int. Cl.: F01D 5/14

(54) **TURBOFAN ENGINE WITH GEARED ARCHITECTURE AND LPC AIRFOILS**
TURBOLUFTSTRAHLTRIEBWERK MIT GETRIEBEFAN UND NIEDERDRUCKVERDICHTERSCHAUFELN
MOTEUR À DOUBLE FLUX À ENGRENAGE AVEC AUBES DE COMPRESSEUR BASSE PRESSION

(30) Priority: 19.02.2014 US 201461941713 P
(43) Date of publication of application: 28.12.2016
(73) Proprietor: Raytheon Technologies Corporation, Farmington, CT 06032 (US)
(72) Inventor: GALLAGHER, Edward J., West Hartford, Connecticut 06117 (US); BRILLIANT, Lisa I., Middletown, Connecticut 06457 (US); STRACCIA, Joseph C., Middletown, Connecticut 06457 (US); BALAMUCKI, Stanley J., The Villages, Florida 32163 (US); STEPHENS, Mark A., Wethersfield, Connecticut 06109 (US); HUDON, Kate, Superior, Colorado 80027 (US)
(74) Representative: Dehns
(86) International application number: PCT/US2015/016078
(87) International publication number: WO 2015/126793

(56) References cited:
- EP-A1- 1 505 302
- EP-A2- 1 111 188
- EP-A2- 1 657 401
- EP-A2- 1 939 399
- EP-A2- 2 075 408
- WO-A1-2007/113149
- US-A- 5 167 489
- US-A1- 2010 054 946
- US-A1- 2012 243 975
- US-A1- 2013 008 170
- US-A1- 2013 192 266
- US-A1- 2013 266 451
- US-B1- 6 195 983
- US-B2- 7 547 186
- US-B2- 8 087 885

## Description

### BACKGROUND

This invention relates to a turbofan engine with a geared architecture and low pressure compressor airfoils having shaped leading edges and trailing edges.

A turbine engine such as a gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes at least low and high pressure compressors, and the turbine section includes at least low and high pressure turbines.

Direct drive gas turbine engines include a fan section that is driven directly by one of the turbine shafts. Rotor blades in the fan section and a low pressure compressor of the compressor section of direct drive engines rotate in the same direction.

Gas turbine engines have been proposed in which a geared architecture is arranged between the fan section and at least some turbines in the turbine section. The geared architecture enables the associated low pressure compressor of the compressor section to be driven at much higher rotational speeds, improving overall efficiency of the engine. The propulsive efficiency of a gas turbine engine depends on many different factors, such as the design of the engine and the resulting performance debits on the fan that propels the engine and the compressor section downstream from the fan. Physical interaction between the fan and the air causes downstream turbulence and further losses. Although some basic principles behind such losses are understood, identifying and changing appropriate design factors to reduce such losses for a given engine architecture has proven to be a complex and elusive task.

Prior compressor airfoil geometries may not be suitable for the low pressure compressor section of gas turbine engines using a geared architecture, since the significantly different speeds of the low pressure compressor changes the desired aerodynamics of the airfoils within the low pressure compressor section

Counter-rotating fan and low pressure compressor blades, which may be used in geared architecture engines, also present design challenges.

A prior art gas turbine engine with the features of the preamble of claim 1 is disclosed in US 2013/192266.

### SUMMARY

According to the present invention, there is provided a gas turbine engine as claimed in claim 1.

Embodiments of the invention are set forth in the dependent claims.

### BRIEF DESCRIPTION OF THE DRAWINGS

The invention can be further understood by reference to the following detailed description when considered in connection with the accompanying drawings wherein:
Figure 1 schematically illustrates a gas turbine engine embodiment with a geared architecture.
Figure 2 schematically illustrates a low pressure compressor section of the gas turbine engine of Figure 1.
Figure 3 is a schematic view of airfoil span positions.
Figure 4 is a schematic view of a cross-section of an airfoil sectioned at a particular span position and depicting directional indicators.
Figure 5 graphically depicts curves for several example airfoil axial leading edge position relative to span, including two prior art curves and several inventive curves according to this invention.
Figure 6 graphically depicts curves for several example airfoil axial trailing edge position relative to span, including two prior art curves and several inventive curves according to this invention.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

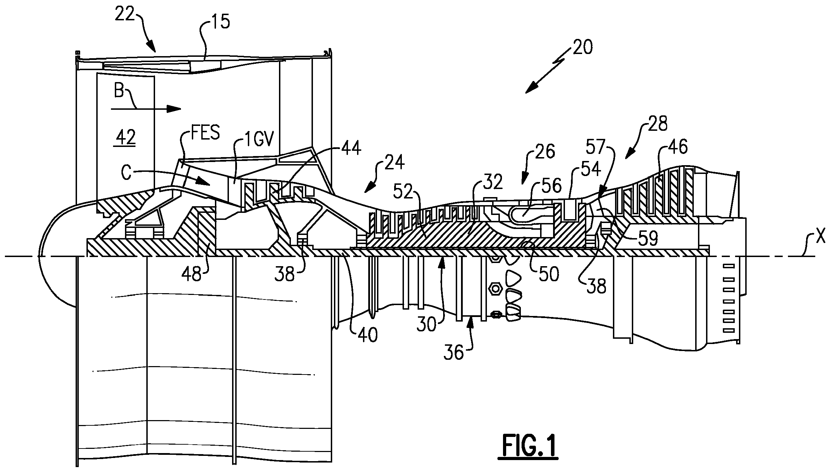

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine.

The example gas turbine engine includes the fan 42 that comprises less than about twenty-six (26) fan blades. In another non-limiting embodiment, the fan section 22 includes less than about twenty (20) fan blades. Moreover, in one disclosed embodiment the low pressure turbine 46 includes no more than about six (6) turbine rotors schematically indicated at 34. In another non-limiting example embodiment the low pressure turbine 46 includes about three (3) turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio is less than about 1.55. In another non-limiting embodiment the low fan pressure ratio is less than about 1.45. In another non-limiting embodiment the low fan pressure ratio is from 1.1 to 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1200 ft / second (365.7 meters/second).

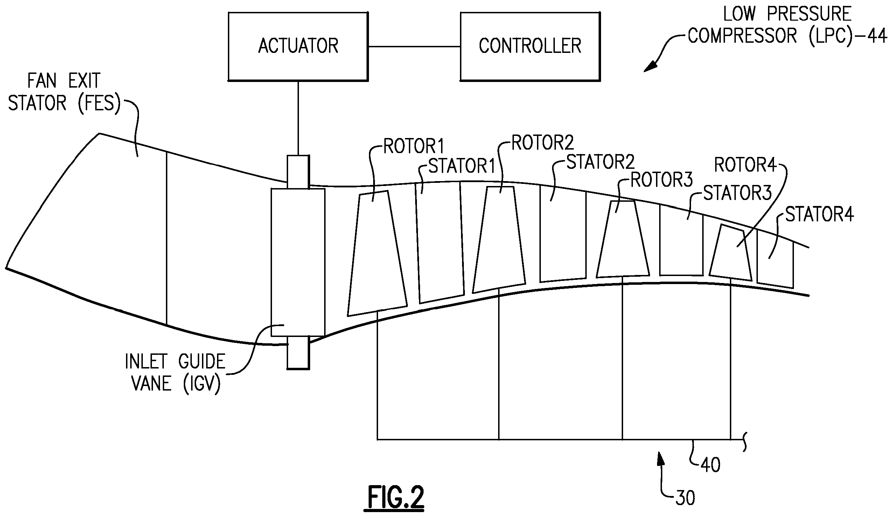

Referring to Figure 2, which schematically illustrates an example low pressure compressor (LPC) 44, a variable inlet guide vane (IGV) is arranged downstream from a fan exit stator (FES). The figure is highly schematic, and the geometry and orientation of various features may be other than shown. An actuator driven by a controller actuates the IGV about their respective axes. Multiple airfoils are arranged downstream from the IGV. The airfoils include alternating stages of rotors (ROTOR1, ROTOR2, ROTOR3, ROTOR4) and stators (STATOR1, STATOR2, STATOR3, STATOR4). In the example shown in Figure 2, the LPC includes four rotors alternating with four stators. However, in another example, a different number of rotors and a different number of stators may be used. Moreover, the IGV and stator stages may all be variable, fixed or a combination thereof.

The disclosed airfoils are used in a low pressure compressor of a two spool engine.

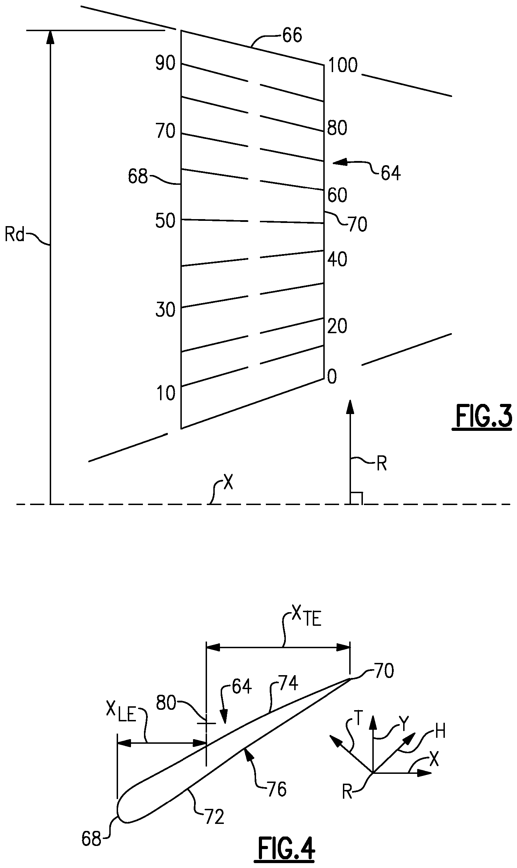

Referring to Figure 3, span positions on an airfoil 64 are schematically illustrated from 0% to 100% in 10% increments. Each section at a given span position is provided by a conical cut that corresponds to the shape of the core flow path, as shown by the large dashed lines. In the case of an airfoil with an integral platform, the 0% span position corresponds to the radially innermost location where the airfoil meets the fillet joining the airfoil to the inner platform. In the case of an airfoil without an integral platform, the 0% span position corresponds to the radially innermost location where the discrete platform meets the exterior surface of the airfoil. For airfoils having no outer platform, such as blades, the 100% span position corresponds to the tip 66. For airfoils having no platform at the inner diameter, such as cantilevered stators, the 0% span position corresponds to the inner diameter location of the airfoil. For stators, the 100% span position corresponds to the outermost location where the airfoil meets the fillet joining the airfoil to the outer platform.

Airfoils in each stage of the LPC are specifically designed radially from an inner airfoil location (0% span) to an outer airfoil location (100% span) and along circumferentially opposite pressure and suction sides 72, 74 extending in chord between a leading and trailing edges 68, 70 (see Figure 4). Each airfoil is specifically twisted with a corresponding stagger angle and bent with specific sweep and/or dihedral angles along the airfoil. Airfoil geometric shapes, stacking offsets, chord profiles, stagger angles, sweep and dihedral angles, among other associated features, are incorporated individually or collectively to improve characteristics such as aerodynamic efficiency, structural integrity, and vibration mitigation, in a gas turbine engine with a geared architecture in view of the higher LPC rotational speeds.

The airfoil 64 has an exterior surface 76 providing a contour that extends from a leading edge 68 generally aftward in a chord-wise direction H to a trailing edge 70, as shown in Figure 4. Pressure and suction sides 72, 74 join one another at the leading and trailing edges 68, 70 and are spaced apart from one another in an airfoil thickness direction T. An array of airfoils 64 are positioned about the axis X (corresponding to an X direction) in a circumferential or tangential direction Y. Any suitable number of airfoils may be used for a particular stage in a given engine application.

The axial leading edge location is arranged at the leading edge 68 for a particular section at a given span location relative to a reference point 80 in the X direction, as shown in Figure 4. The reference point 80 is a location such as the axial center of the root or the axial center of a rotor bore, for example. A positive X value corresponds to the aftward direction along the engine's axis of rotation. A negative X value corresponds to the forward direction along the engine's axis of rotation. The value X_{LE} corresponds to the axial distance from the reference point 80 to the axial leading edge location at a given span location. A positive slope corresponds to an aft-leaning leading edge, and a negative slope corresponds to a forward-leaning leading edge.

The axial trailing edge location is arranged at the trailing edge 70 for a particular section at a given span location relative to the reference point 80 in the X direction. The value X_{TE} corresponds to the axial distance from the reference point 80 to the axial trailing edge location at a given span location. A positive slope corresponds to an aft-leaning trailing edge, and a negative slope corresponds to a forward-leaning trailing edge.

The exterior surface 76 of the airfoil 64 generates lift based upon its geometry and directs flow along the core flow path C. The airfoil 64 may be constructed from a composite material, or an aluminum alloy or titanium alloy, or a combination of one or more of these. Abrasion-resistant coatings or other protective coatings may be applied to the airfoil. The rotor stages may constructed as an integrally bladed rotor, if desired, or discrete blades having roots secured within corresponding rotor slots of a disc. The stators may be provided by individual vanes, clusters of vanes, or a full ring of vanes.

Airfoil geometries can be described with respect to various parameters provided. The disclosed graph(s) illustrate the relationships between the referenced parameters within 10% of the desired values, which correspond to a hot aerodynamic design point for the airfoil. In another example, the referenced parameters are within 5% of the desired values, and in another example, the reference parameters are within 2% of the desired values. It should be understood that the airfoils may be oriented differently than depicted, depending on the rotational direction of the blades. The signs (positive or negative) used, if any, in the graphs of this disclosure are controlling and the drawings should then be understood as a schematic representation of one example airfoil if inconsistent with the graphs. The signs in this disclosure, including any graphs, comply with the "right hand rule." The axial leading and trailing edge positions vary with position along the span, and varies between a hot, running condition and a cold, static ("on the bench") condition.

The geared architecture 48 of the disclosed example permits the fan 42 to be driven by the low pressure turbine 46 through the low speed spool 30 at a lower angular speed than the low pressure turbine 46, which enables the LPC 44 to rotate at higher, more useful speeds. The axial leading and trailing edge positions in a hot, running condition along the span of the airfoils 64 provides necessary compressor operation in cruise enabled by the geared architecture 48, to thereby enhance aerodynamic functionality and thermal efficiency. As used herein, the hot, running condition is the condition during cruise of the gas turbine engine 20. For example, the axial leading and trailing edge positions in the hot, running condition can be determined in a known manner using finite element analysis.

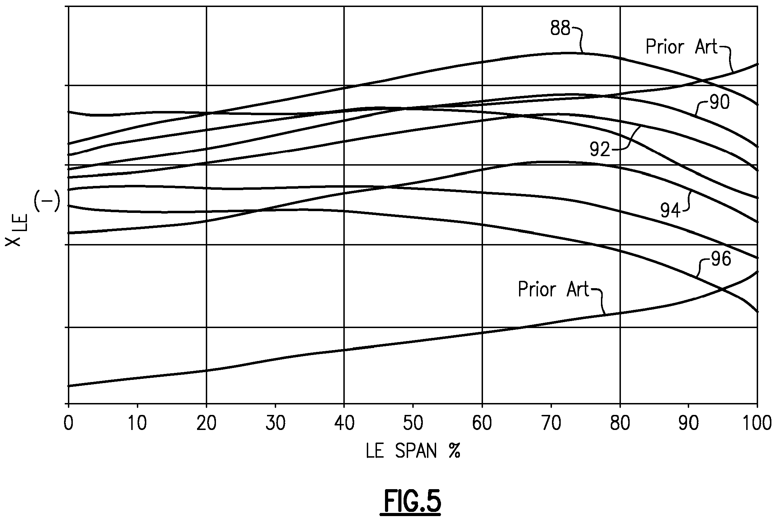

Figure 5 illustrates the relationship between the axial leading edge position (X_{LE}) and the leading edge span (LE SPAN %), which is the radial position at the leading edge 68. The airfoils are LPC rotor blades. Two prior art curves ("PRIOR ART") are illustrated as well as several example inventive curves 88, 90, 92, 94. The airfoil 64 has a relationship between a leading edge position and span position that defines a curve with a negative slope from 80% span to 100% span, the negative slope corresponding to a forward leaning leading edge. The curves 88, 90, 92, 94 have a positive slope preceding the negative slope. The positive slope corresponds to an aft leaning leading edge, and a transition is provided between the positive and negative slope in a range of 50% span to 75% span. For the curves 88, 90, 92, 94, the positive slope begins at 0% span and continues to the transition.

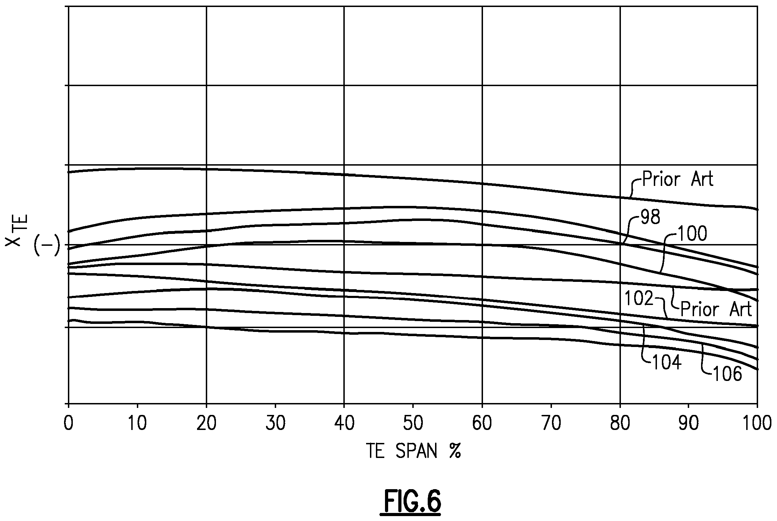

Figure 6 illustrates the relationship between the axial trailing edge position (X_{TE}) and the trailing edge span (TE SPAN %), which is the radial position at the trailing edge 70. The airfoils are LPC rotor blades. Two prior art curves ("PRIOR ART") are illustrated as well as several example inventive curves 98, 100, 102, 104, 106. The airfoil 64 has a relationship between a trailing edge position and span position that includes another curve with a non-linear slope from 50% span to 100% span.

The prior art has used generally linear axial trailing edges LPC blades with a aft-leaning leading edge near the tip. The disclosed airfoils include significant forward leaning leading edges to improve the aerodynamic efficiency of the high speed LPC blades downstream from a counter-rotating fan.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A gas turbine engine (20) comprising:
a combustor section (26) arranged between a compressor section (24) and a turbine section (28), wherein the compressor section (24) includes a low pressure compressor (44) and a high pressure compressor (52), and the high pressure compressor (52) is arranged immediately upstream of the combustor section (26);
a fan section (22) having an array of twenty-six or fewer fan blades, and a fan pressure ratio of less than 1.55;
a geared architecture (48) coupling the fan section (22) to the turbine section (28); and a compressor airfoil (64) arranged in the low pressure compressor (44) of the compressor section (24), the compressor airfoil (64) comprising pressure and suction sides (72, 74) extending in a radial direction from a 0% span position to a 100% span position,
wherein the low pressure compressor (44) comprises a plurality of the compressor airfoils (64), and the compressor airfoils (64) counter-rotate relative to the fan blades,
**characterized in that**
the airfoil (64) has a relationship between an axial leading edge position and span position that defines a curve with a negative slope from 80% span to 100% span, the negative slope corresponding to a forward leaning leading edge, the forward direction defined in relation to the front of the gas turbine engine (20), the curve having a positive slope preceding the negative slope, the positive slope corresponding to an aft leaning leading edge (68), a transition between the positive and negative slope being in a range of 50% span to 75% span, the positive slope beginning at 0% span and continuing to the
transition, and the airfoil has a relationship between an axial trailing edge position and span position that includes another curve with a non-linear slope from 50% span to 100% span.

2. The gas turbine engine (20) according to claim 1, wherein the gas turbine engine (20) is a two-spool configuration.

## Patentansprüche

1. Gasturbinentriebwerk (20), das Folgendes umfasst:
einen Brennkammerabschnitt (26), der zwischen einem Verdichterabschnitt (24) und einem Turbinenabschnitt (28) angeordnet ist, wobei der Verdichterabschnitt (24) einen Niederdruckverdichter (44) und einen Hochdruckverdichter (52) beinhaltet und der Hochdruckverdichter (52) unmittelbar stromaufwärts des Brennkammerabschnitts (26) angeordnet ist;
einen Fanabschnitt (22), der eine Anordnung von sechsundzwanzig oder weniger Fanblättern und ein Fandruckverhältnis von weniger als 1,55 aufweist;
eine Getriebearchitektur (48), die den Fanabschnitt (22) an den Turbinenabschnitt (28) koppelt; und eine Verdichterschaufel (64), die in dem Niederdruckverdichter (44) des Verdichterabschnitts (24) angeordnet ist, wobei die Verdichterschaufel (64) eine Druck- und eine Saugseite (72, 74) umfasst, die sich in einer radialen Richtung von einer 0 % Spannweitenposition zu einer 100 % Spannweitenposition erstrecken, wobei der Niederdruckverdichter (44) eine Vielzahl der Verdichterschaufeln (64) umfasst und die Verdichterschaufeln (64) relativ zu den Fanblättern gegenläufig rotieren,
**dadurch gekennzeichnet, dass** die Schaufel (64) eine Beziehung zwischen einer axialen Anströmkantenposition und einer Spannweitenposition aufweist, die eine Kurve mit einer negativen Steigung von 80 % Spannweite bis 100 % Spannweite definiert, wobei die negative Steigung einer nach vorn geneigten Anströmkante entspricht, die Vorwärtsrichtung in Bezug auf die Vorderseite des Gasturbinentriebwerks (20) definiert ist, die Kurve eine der negativen Steigung vorausgehende positive Steigung aufweist, die positive Steigung einer nach hinten geneigten Anströmkante (68) entspricht, ein Übergang zwischen der positiven und negativen Steigung in einem Bereich von 50 % Spannweite bis 75 %Spannweite liegt, die positive Steigung bei 0 % Spannweite beginnt und bis zu dem Übergang fortläuft und die Schaufel eine Beziehung zwischen einer axialen Abströmkantenposition und einer Spannweitenposition aufweist, die eine andere Kurve mit einer nicht linearen Steigung von 50 % Spannweite bis 100 % Spannweite beinhaltet.

2. Gasturbinentriebwerk (20) nach Anspruch 1, wobei es sich bei dem Gasturbinentriebwerk (20) um eine Zweispulenkonfiguration handelt.

## Revendications

1. Moteur à turbine à gaz (20) comprenant :
une section de chambre de combustion (26) agencée entre une section de compresseur (24) et une section de turbine (28), dans lequel la section de compresseur (24) comporte un compresseur basse pression (44) et un compresseur haute pression (52), et le compresseur haute pression (52) est agencé immédiatement en amont de la section de chambre de combustion (26) ;
une section de soufflante (22) ayant un réseau de vingtsix pales de soufflante ou moins, et un rapport de pression de soufflante inférieur à 1,55 ;
une architecture à engrenages (48) couplant la section de soufflante (22) à la section de turbine (28) ; et une aube de compresseur (64) agencée dans le compresseur basse pression (44) de la section de compresseur (24), l'aube de compresseur (64) comprenant des intrados et extrados (72, 74) s'étendant dans une direction radiale à partir d'une position d'envergure de 0 % vers une position d'envergure de 100 %, dans lequel le compresseur basse pression (44) comprend une pluralité d'aubes de compresseur (64), et les aubes de compresseur (64) tournent en sens inverse par rapport aux pales de soufflante,
**caractérisé en ce que** l'aube (64) a une relation entre une position de bord d'attaque axial et une position d'envergure qui définit une courbe avec une pente négative allant de 80 % d'envergure à 100 % d'envergure, la pente négative correspondant à un bord d'attaque incliné vers l'avant, la direction avant étant définie par rapport à l'avant du moteur à turbine à gaz (20), la courbe présentant une pente positive précédant la pente négative, la pente positive correspondant à un bord d'attaque incliné vers l'arrière (68), une transition entre la pente positive et négative étant dans une plage de 50 % à 75 % d'envergure, la pente positive commençant à 0 % d'envergure et se poursuivant jusqu'à la transition, et l'aube a une relation entre une position de bord de fuite axiale et une position d'envergure qui comporte une autre courbe avec une pente non linéaire de 50 % à 100 % d'envergure.

2. Moteur à turbine à gaz (20) selon la revendication 1, dans lequel le moteur à turbine à gaz (20) est une configuration à deux corps.
